(19)

Europäisches
Patentamt
European
Patent Office
Office européen
des brevets

(11) **EP 4 074 563 A1**

(12) **EUROPEAN PATENT APPLICATION**
published in accordance with Art. 153(4) EPC

(43) Date of publication:
**19.10.2022 Bulletin 2022/42**

(21) Application number: **19958212.3**

(22) Date of filing: **30.12.2019**

(51) International Patent Classification (IPC):
***B60W 30/095*** *(2012.01)*

(52) Cooperative Patent Classification (CPC):
**B60W 30/095; G06K 9/62; G06N 3/04; G06N 3/08; G06Q 10/04**

(86) International application number:
**PCT/CN2019/129820**

(87) International publication number:
**WO 2021/134169 (08.07.2021 Gazette 2021/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129, (CN)**

(72) Inventors:
• **LIU, Yalin**
  **Shenzhen, Guangdong 518129 (CN)**

• **SONG, Xiaolin**
  **Changsha, Hunan 410082 (CN)**
• **SHI, Huijie**
  **Changsha, Hunan 410082 (CN)**
• **CAO, Haotian**
  **Changsha, Hunan 410082 (CN)**

(74) Representative: **Epping - Hermann - Fischer Patentanwaltsgesellschaft mbH Schloßschmidstraße 5 80639 München (DE)**

(54) **TRAJECTORY PREDICTION METHOD AND RELATED DEVICE**

(57)     A track prediction method is provided, and is applied to autonomous driving in the field of artificial intelligence. The method includes: obtaining posture information and historical moving track information that are of a target object (201); obtaining, based on the posture information, target information that indicates a behavior intent of the target object (202); and obtaining a predicted track of the target object by using a track prediction model and by using the target information and the historical track information as input (203). In this method, a behavior intent of a pedestrian is used as an input feature for pedestrian track prediction, so that a pedestrian track prediction error can be reduced, and pedestrian track prediction performance can be improved.

**EP 4 074 563 A1**

Obtain posture information and historical moving track information that are of a target object — 201

Obtain, based on the posture information, target information that indicates a behavior intent of the target object — 202

Obtain a predicted track of the target object by using a track prediction model and by using the target information and the historical track information as input — 203

FIG. 2

**Description**

**TECHNICAL FIELD**

This application relates to the field of artificial intelligence, and in particular, to a track prediction method and a related device.

**BACKGROUND**

With development of economy and improvement of people's living standard, vehicle population increases year by year. Therefore, traffic congestion and traffic accidents occur. To improve driving safety, autonomous driving technology is currently applied to the vehicle, to implement autonomous driving of the vehicle.

In an autonomous driving process of the vehicle, a track of a nearby pedestrian needs to be predicted. Now, a commonly used pedestrian track prediction method is predicting a track of a pedestrian based on historical track information of the pedestrian. However, many subjective factors exist in a walking behavior of the pedestrian. Therefore, the aforementioned method for predicting a future predicted track of a pedestrian based on historical track information of the pedestrian has a poor prediction effect.

**SUMMARY**

This application provides a track prediction method and a related device. A behavior intent of a pedestrian is used as an input feature for pedestrian track prediction, so that a pedestrian track prediction error can be reduced, and pedestrian track prediction performance can be improved.

According to a first aspect, this application provides a track prediction method, and the method includes: obtaining posture information and historical moving track information that are of a target object; obtaining, based on the posture information, target information that indicates a behavior intent of the target object; and obtaining a predicted track of the target object by using a track prediction model and by using the target information and the historical track information as input.

In an optional design of the first aspect, the behavior intent includes at least one of the following: changing from a moving state to a stationary state, maintaining a moving state, changing from a stationary state to a moving state, and changing from a first moving state to a second moving state.

In an optional design of the first aspect, the target object includes a plurality of skeleton nodes, and the posture information includes skeleton node locations of each skeleton node at a plurality of moments.

In an optional design of the first aspect, the target object includes a first skeleton node; the posture information includes a first skeleton node location, a second skeleton node location, and a third skeleton node location; the first skeleton node location is a location of the first skeleton node of the target object at a first moment; the third skeleton node location is a location of the first skeleton node of the target object at a third moment; the second skeleton node location corresponds to a location of the first skeleton node of the target object at a second moment; the first moment, the second moment, and the third moment are successively adjacent moments in a time dimension; and the second skeleton node location is related to the first skeleton node location and/or the third skeleton node location.

In an optional design of the first aspect, the second skeleton node location is a central location between the first skeleton node location and the third skeleton node location.

In an optional design of the first aspect, the method further includes:
performing momentary interval sampling on the skeleton node locations of each skeleton node at a plurality of moments, to obtain processed posture information, where the processed posture information is used to obtain the target information that indicates the behavior intent of the target object.

In an optional design of the first aspect, the method further includes:
performing normalization processing on the skeleton node locations of each skeleton node at a plurality of moments, to obtain normalized posture information, where the normalized posture information is used to obtain the target information that indicates the behavior intent of the target object.

In an optional design of the first aspect, the obtaining, based on the posture information, target information that indicates a behavior intent of the target object includes:
obtaining, by using the posture information as input and by using a recurrent neural network model, the target information that indicates the behavior intent of the target object.

In an optional design of the first aspect, the historical track information includes historical track point locations at a plurality of moments, each moment corresponds to one historical track point location, the historical track point locations at a plurality of moments are represented based on a preset coordinate system, the historical track point locations at a plurality of moments include a first track point location, and the first track point location is located at a preset location in the preset coordinate system.

The first track point location may be an initial track location in the plurality of historical track locations, or a last historical track location in terms of time. The preset location in the preset coordinate system may be an origin of coordinates in the preset coordinate system, or any other preset coordinate location in the preset coordinate system. In an optional design of the first aspect, the historical track point location is a location relative to the ground.

In an optional design of the first aspect, the obtaining a predicted track of the target object by using a track prediction model and by using the target information and the historical track information as input includes:
obtaining the predicted track of the target object by using the recurrent neural network model and by using the target information and the historical track information as input.

According to a second aspect, this application provides an execution device, including:

an obtaining module, configured to: obtain posture information and historical moving track information that are of a target object, and
obtain, based on the posture information, target information that indicates a behavior intent of the target object; and
a prediction module, configured to obtain a predicted track of the target object by using a track prediction model and by using the target information and the historical track information as input.

In an optional design of the second aspect, the behavior intent includes at least one of the following:
changing from a moving state to a stationary state, maintaining a moving state, changing from a stationary state to a moving state, and changing from a first moving state to a second moving state.

In an optional design of the second aspect, the target object includes a plurality of skeleton nodes, and the posture information includes skeleton node locations of each skeleton node at a plurality of moments.

In an optional design of the second aspect, the target object includes a first skeleton node; the posture information includes a first skeleton node location, a second skeleton node location, and a third skeleton node location; the first skeleton node location is a location of the first skeleton node of the target object at a first moment; the third skeleton node location is a location of the first skeleton node of the target object at a third moment; the second skeleton node location corresponds to a location of the first skeleton node of the target object at a second moment; the first moment, the second moment, and the third moment are successively adjacent moments in a time dimension; and the second skeleton node location is related to the first skeleton node location and/or the third skeleton node location.

In an optional design of the second aspect, the second skeleton node location is a central location between the first skeleton node location and the third skeleton node location.

In an optional design of the second aspect, the execution device further includes:
a sampling module, configured to perform momentary interval sampling on the skeleton node locations of each skeleton node at a plurality of moments to obtain processed posture information, where the processed posture information is used to obtain the target information that indicates the behavior intent of the target object.

In an optional design of the second aspect, the execution device further includes:
a normalization module, configured to perform normalization processing on the skeleton node locations of each skeleton node at a plurality of moments to obtain normalized posture information, where the normalized posture information is used to obtain the target information that indicates the behavior intent of the target object.

In an optional design of the second aspect, the obtaining module is specifically configured to:
obtain, by using the posture information as input and by using a recurrent neural network model, the target information that indicates the behavior intent of the target object.

In an optional design of the second aspect, the historical track information includes historical track point locations at a plurality of moments, each moment corresponds to one historical track point location, the historical track point locations at a plurality of moments are represented based on a preset coordinate system, the historical track point locations at a plurality of moments include a first track point location, and the first track point location is located at a preset location in the preset coordinate system.

In an optional design of the second aspect, the historical track point location is a location relative to the ground.

In an optional design of the second aspect, the prediction module is specifically configured to:

obtain an output vector by using the recurrent neural network model and by using the target information and the historical track information as input, and
map the output vector to the predicted track of the target object.

According to a third aspect, an embodiment of the present invention provides a terminal device, including a memory, a communication interface, and a processor coupled to the memory and the communication interface, where the memory is configured to store instructions, the processor is configured to execute the instructions, the communication interface is configured to communicate with a target vehicle under control of the processor, and when the processor executes the instructions, the processor performs the method described in the first aspect or the possible embodiments of the first aspect.

According to a fourth aspect, a computer-readable storage medium is provided, where the computer-readable storage medium stores program code used for vehicle control. The program code includes instructions used to perform the method described in the first aspect or the possible embodiments of the first aspect.

According to a fifth aspect, a computer program product including instructions is provided. When the computer program product is run on a computer, the computer is enabled to perform the method described in the first aspect or the possible embodiments of the first aspect.

Embodiments of this application provide a track prediction method, and the method includes: obtaining posture information and historical moving track information that are of a target object; obtaining, based on the posture information, target information that indicates a behavior intent of the target object; and obtaining a predicted track of the target object by using a track prediction model and by using the target information and the historical track information as input. In the foregoing manner, a behavior intent of a pedestrian is used as an input feature for pedestrian track prediction, so that a pedestrian track prediction error can be reduced, pedestrian track prediction performance can be improved, a prior-art problem of inaccurate prediction of a pedestrian moving track can be resolved, and vehicle control security is improved.

## BRIEF DESCRIPTION OF DRAWINGS

FIG. 1A is a schematic diagram of a structure of an artificial intelligence main framework;
FIG. 1B is a possible schematic diagram of a structure of a terminal device according to this application;
FIG. 1C is another possible schematic diagram of a structure of a terminal device according to this application;
FIG. ID is a possible schematic diagram of a scenario according to an embodiment of this application;
FIG. 2 is a schematic diagram of an embodiment of a track prediction method according to an embodiment of this application;
FIG. 3 is a schematic diagram of a behavior intent of a pedestrian according to an embodiment of this application;
FIG. 4 is a schematic diagram of processing historical track information according to an embodiment of this application;
FIG. 5 is a schematic diagram of a confusion matrix according to an embodiment of this application;
FIG. 6 is a possible schematic diagram of a structure of a terminal device described in an embodiment of this application;
FIG. 7 is a schematic diagram of a structure of another terminal device 700 according to an embodiment of this application;
FIG. 8 is a schematic diagram of a structure of an execution device according to an embodiment of this application; and
FIG. 9 is a schematic diagram of a structure of a chip according to an embodiment of this application.

## DESCRIPTION OF EMBODIMENTS

Embodiments of this application provide a track prediction method and a related device, to reduce a pedestrian track prediction error and improve pedestrian track prediction performance.

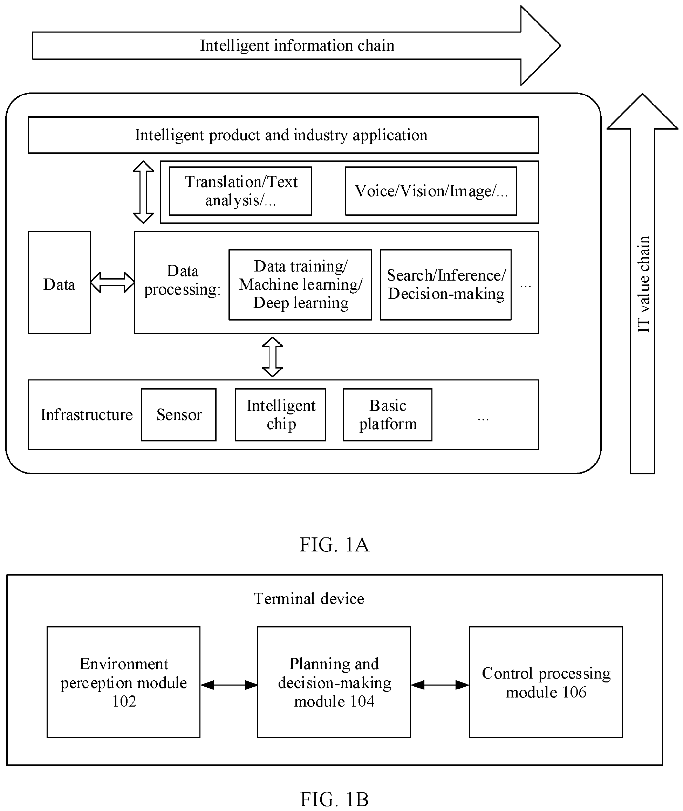

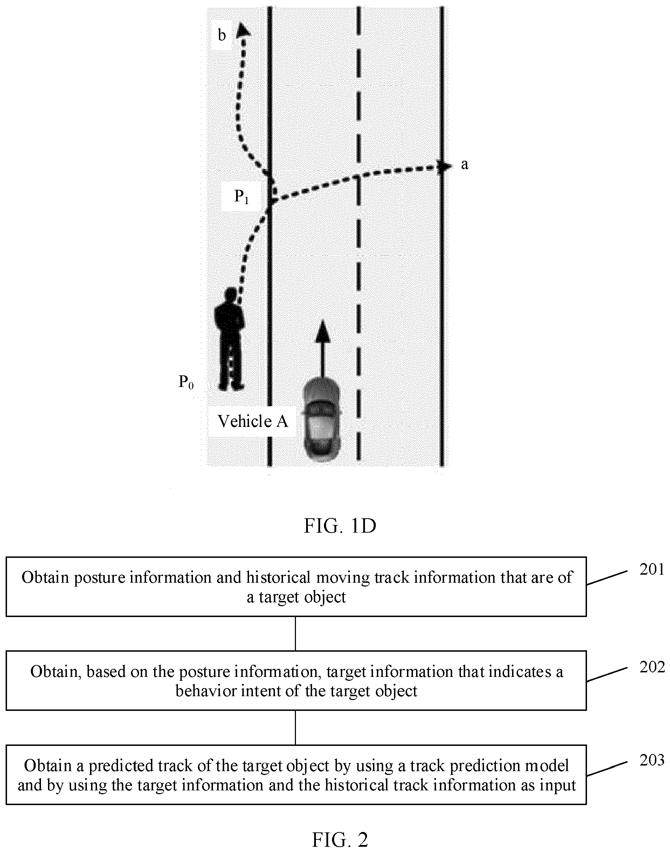

The following describes embodiments of this application with reference to the accompanying drawings. A person of ordinary skill in the art may learn that, with development of technologies and emergence of new scenarios, the technical solutions provided in embodiments of this application are also applicable to a similar technical problem. In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances. This is merely a distinguishing manner used when objects that have a same attribute are described in embodiments of this application. In addition, the terms "include", "contain" and any other variants mean to cover a non-exclusive inclusion, so that a process, method, system, product, or device that includes a list of units is not necessarily limited to those units, but may include other units that are not clearly listed or that are inherent to these processes, methods, products, or devices. First, an overall working process of an artificial intelligence system is described. FIG. 1A shows a schematic diagram of a structure of an artificial intelligence main framework. The following describes the foregoing artificial intelligence main framework from two dimensions: an "intelligent information chain" (a horizontal axis) and an "IT value chain" (a vertical axis). The "intelligent information chain" reflects a general process from data obtaining to data processing. For example, the process may be a general process of intelligent information perception, intelligent information representation and formation, intelligent inference, intelligent decision-making, and intelligent execution and output. In this process, data goes through a condensation process of "data-information-knowledge-wisdom". The "IT value chain" reflects an industrial ecological process from an underlying infrastructure of artificial intelligence to information (providing and processing technology implementation) to a system, and reflects a value brought by artificial intelligence to the information technology industry.

(1) Infrastructure

The infrastructure provides computing capability support for the artificial intelligence system, communicates with an external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platform assurance and support such as a distributed computing framework and a network, and may include cloud storage and computing, an interconnection and interworking network, and the like. For example, the sensor communicates with the outside to obtain data, and the data is provided, for computation, to an intelligent chip in a distributed computing system that is provided by the basic platform.

(2) Data

Data at an upper layer of the infrastructure is used to indicate a data source in the field of artificial intelligence. The data relates to a graph, an image, a voice, and a text, and further relates to internet of things data of a conventional device. The data includes service data of an existing system and perception data such as force, displacement, a liquid level, temperature, and humidity.

(3) Data processing

Data processing usually includes manners such as data training, machine learning, deep learning, search, inference, and decision-making.
In machine learning and deep learning, intelligent information of the data may be modeled, extracted, preprocessed, trained, or the like in a symbolized and formalized manner.
Inference is a process of simulating intelligent human inference methods in a computer or an intelligent system and using, based on an inference control policy, formalized information to carry out machine thinking and resolve problems. Typical functions are search and matching.
Decision-making is a process of making a decision after intelligent information inference, and usually provides functions such as classification, ranking, and prediction.

(4) General capabilities

After the data processing mentioned above is performed on data, some general capabilities may be further formed based on a data processing result. For example, the general capability may be an algorithm or a general-purpose system, such as translation, text analysis, computer vision processing, voice recognition, and image recognition.

(5) Intelligent products and industry applications

The intelligent products and industry applications are products and applications of an artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, intelligent home, intelligent healthcare, intelligent security protection, autonomous driving, a safe city, and the like.
The following describes the technical solutions in embodiments of the present invention in detail with reference to the accompanying drawings of the present invention.
First, a schematic diagram of a structure of a terminal device to which this application is applicable is described. FIG. 1B shows a possible schematic diagram of a structure of a terminal device according to this application. As shown in FIG. IB, the terminal device includes an environment perception module 102, a planning and decision-making module 104, and a control processing module 106. The environment perception module 102 mainly collects, by using a peripheral system (such as a sensor or a camera), obstacle information, information about a surrounding environment in which the terminal device is located, and traveling information about a vehicle in which the terminal device is located. The obstacle information includes but is not limited to a geographical location of an obstacle, a moving speed of the obstacle, a movement direction of the obstacle, a movement acceleration of the obstacle, a variance of the movement direction of the obstacle, a variance of the moving speed of the obstacle, and the like. The obstacle includes but is not limited to a vehicle, a pedestrian, a living obstacle, an inanimate obstacle, and the like. In this application, an example in which the obstacle is a pedestrian is used to specifically describe some embodiments of this application. The surrounding environment information includes but is not limited to information such as map information, weather information, an intersection type, lane lines, a quantity of lanes, whether a road is congested, a vehicle flow speed, a vehicle flow acceleration, and a distance between the terminal device and the obstacle.

The traveling information includes but is not limited to a geographical location, a traveling speed, a traveling direction, a traveling acceleration, a distance between the vehicle and the obstacle, and the like that are of the vehicle. The terminal device includes but is not limited to a vehicle such as a car, a train, a truck, or a communication device installed on the vehicle, for example, a vehicle-mounted device.

The planning and decision-making module 104 includes a behavior prediction module and a planning module. The behavior prediction module is mainly configured to predict, based on the foregoing information collected by the environment perception module, a behavior intent of the obstacle (for example, a behavior result of a pedestrian described below in this application) and a moving track (that is, an obstacle track) corresponding to the behavior intent. The planning module is configured to obtain a corresponding control policy based on the behavior intent and on a premise that safety is ensured, to subsequently control safe driving of the vehicle by using the control policy. The control policy is self-defined by a user side or a terminal device side in advance, or is generated based on the behavior intent. Details are described below. The control policy is used to indicate to adjust a corresponding vehicle parameter for the vehicle, to implement safe driving of the vehicle.

The control processing module is configured to correspondingly control and adjust the vehicle based on the control policy obtained by the planning and decision-making module, to avoid collision between the vehicle and the obstacle. For example, vehicle parameters such as a steering wheel angle of the vehicle, a traveling speed, whether to brake, and whether to press an acceleration pedal are controlled. How to control safe driving of the vehicle based on the behavior result (that is, the behavior intent) of the pedestrian is specifically described below in detail.

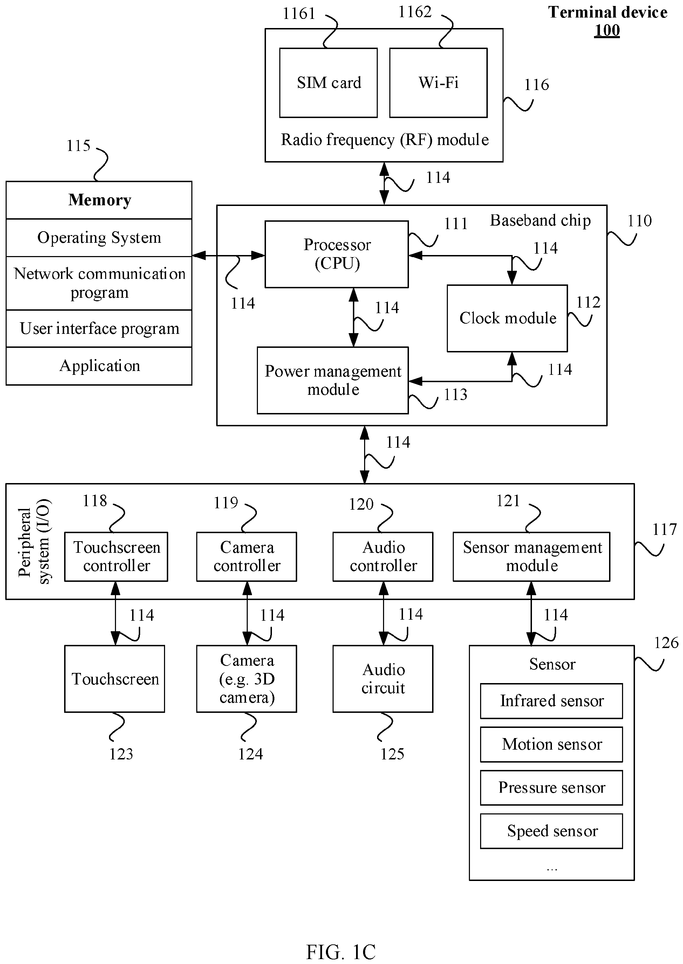

FIG. 1C shows another possible schematic diagram of a structure of a terminal device according to this application. As shown in FIG. 1C, a terminal device 100 may include a baseband chip 110, a memory 115, one or more computer-readable storage media, a radio frequency (RF) module 116, and a peripheral system 117. These components may perform communication by using one or more communication buses 114.

The peripheral system 117 is mainly configured to implement an interaction function between a terminal device 110 and a user (for example, a pedestrian)/an external environment, and mainly includes an input/output apparatus of the terminal 100. In a specific implementation, the peripheral system 117 may include a touchscreen controller 118, a camera controller 119, an audio controller 120, and a sensor management module 121. The controllers may be coupled with corresponding peripheral devices such as a touchscreen 123, a camera 124, an audio circuit 125, and a sensor 126. In some embodiments, a gesture sensor in the sensor 126 may be configured to receive a gesture control operation entered by the user. A speed sensor in the sensor 126 may be configured to collect a traveling speed of the terminal device, a moving speed of an obstacle in an environment, or the like. The touchscreen 123 may be used as a prompt apparatus, and is mainly configured to prompt an obstacle through screen display, projection, or the like. For example, when a pedestrian crosses a road, the touchscreen 123 prompts the pedestrian to accelerate walking by displaying a text on the screen. Optionally, the peripheral system 117 may further include another prompt apparatus such as a light or a display, to provide an interactive prompt between the vehicle and a pedestrian, and avoid collision between the vehicle and the pedestrian. It should be noted that the peripheral system 117 may further include another I/O peripheral. The baseband chip 110 may integrate and include one or more processors 111, a clock module 112, and a power management module 113. The clock module 112 integrated into the baseband chip 110 is mainly configured to generate, for the processor 111, a clock required for data transmission and time sequence control. The power management module 113 integrated into the baseband chip 110 is mainly configured to provide a stable and high-precision voltage for the processor 111, the radio frequency module 116, and the peripheral system.

The radio frequency (RF) module 116 is configured to receive and send a radio frequency signal, and mainly integrates a receiver and a transmitter that are of the terminal 100. The radio frequency (RF) module 116 communicates with a communication network and another communication device by using the radio frequency signal. In a specific implementation, the radio frequency (RF) module 116 may include but is not limited to an antenna system, an RF transceiver, one or more amplifiers, a tuner, one or more oscillators, a digital signal processor, a CODEC chip, a SIM card, a storage medium, and the like. In some embodiments, the radio frequency (RF) module 116 may be implemented on a separate chip.

The memory 115 is coupled to the processor 111, and is configured to store various software programs and/or a plurality of sets of instructions. In a specific implementation, the memory 115 may include a high-speed random access memory, and may further include a non-volatile memory, for example, one or more magnetic disk storage devices, a flash memory device, or another non-volatile solid-state storage device. The memory 115 may store an operating system, for example, an embedded operating system such as ANDROID, IOS, WINDOWS, or LINUX. The memory 115 may further store a network communication program. The network communication program may be used to communicate with one or more additional devices, one or more terminal devices, one or more terminal devices, or the like.

Second, a possible schematic diagram of a scenario to which this application is applicable is described. As shown in FIG. ID, on a road on which a vehicle passes by, a pedestrian is located at a point PI that is on an edge of the road. To prevent the vehicle from colliding with the pedestrian, the vehicle needs to predict a moving track of the pedestrian, and control safe driving of the vehicle based on the predicted moving track, to avoid colliding with the pedestrian. For example, if it is predicted that a moving track of the pedestrian after the point PI is a moving track b (traversing a road), the vehicle may be controlled to decelerate, or even brake and wait, to avoid the pedestrian. For another example, if it is predicted that a moving track of the pedestrian after the point PI is a moving track a, that is, going straight along the road or stopping at the point P1, no control operation needs to be performed on the vehicle, and the vehicle does not collide with the pedestrian.

In a process of proposing this application, the applicant finds that in the prior art, a moving track of a pedestrian is predicted based on historical track information of the pedestrian, and a prediction result is inaccurate. Consequently, vehicle control does not have high reliability and safety. To resolve the foregoing problem, this application provides a corresponding track prediction method. The following provides a specific description.

FIG. 2 is a schematic diagram of an embodiment of a track prediction method according to an embodiment of this application. As shown in FIG. 2, the track prediction method provided in this embodiment of this application includes the following steps.

S201: Obtain posture information and historical moving track information that are of a target object.

For example, the target object is a pedestrian. In this embodiment of this application, a terminal device may obtain the posture information by using a peripheral system (for example, a sensor or a camera). The posture information may be used to predict a behavior intent that the pedestrian is about to present. In this embodiment of this application, the terminal device may obtain, by using the posture information as input and by using a recurrent neural network, target information that indicates the behavior intent of the target object.

In this embodiment of this application, the posture information of the target object may be obtained, where the target object includes a plurality of skeleton nodes, and the posture information includes skeleton node locations of each skeleton node at a plurality of moments.

In this embodiment of this application, a video stream of the pedestrian may be first obtained, video processing is performed on the obtained video stream, and convolutional neural network (convolutional neural network, CNN) skeleton fitting is performed to obtain skeleton information (which may also be referred to as a skeleton pixel coordinate sequence in the following) of the pedestrian at a plurality of moments (in other words, a plurality of frames in the video stream). The skeleton information of the pedestrian at each moment may include a plurality of skeleton node locations. Specifically, the posture information may be represented as:

$$\left(x_1, y_1, x_2, y_2, \cdots, x_i, y_i, \cdots\right),$$

where

$i$ is a skeleton node index, and $(x_i, y_i)$ are respectively a pixel horizontal coordinate and a pixel vertical coordinate of a skeleton node whose index is $i$ and that is in the video stream. It should be noted that, in an embodiment, considering that a head joint point has a high loss probability, skeleton information related to the head joint point of the pedestrian may be removed.

It should be noted that a skeleton node may be a human joint such as an elbow joint or an ankle joint. A type of the skeleton node is not limited herein.

For example, a pedestrian is identified from an obtained video stream of 12 frames, CNN skeleton fitting is performed on the video stream to obtain skeleton information, and the obtained skeleton information is $X = (X_1, \cdots, X_i, \cdots, X_{12})$, where $X_i$ is a location of each skeleton node of the pedestrian at the $i^{th}$ moment, $X_i = (x_1, y_1, x_2, y_2, \cdots, x_k, y_k, \cdots x_{12}, y_{12})$, and $k$ is a skeleton node index.

In other words, in this embodiment of this application, the terminal device obtains skeleton node locations of each skeleton node of the target object at a plurality of moments.

Optionally, in an embodiment, the target object includes a first skeleton node; the posture information includes a first skeleton node location, a second skeleton node location, and a third skeleton node location; the first skeleton node location is a location of the first skeleton node of the target object at a first moment; the third skeleton node location is a location of the first skeleton node of the target object at a third moment; the second skeleton node location corresponds to a location of the first skeleton node of the target object at a second moment; the first moment, the second moment, and the third moment are successively adjacent moments in a time dimension; and the second skeleton node location is related to the first skeleton node location and/or the third skeleton node location. Particularly, the second skeleton node location is a central location between the first skeleton node location and the third skeleton node location.

In this embodiment of this application, for a case in which skeleton information of one or more frames in the obtained video stream is lost, interpolation supplement processing may be performed by using skeleton node locations in previous and next frames. In an interpolation manner, a lost skeleton node location may be obtained by averaging or performing another operation on skeleton node locations of a skeleton node that correspond to a previous frame and a next frame.

Specifically, the posture information includes the first skeleton node location of the first skeleton node of the target object at the first moment, the second skeleton node location at the second moment, and the third skeleton node location at the third moment. For example, the first skeleton node may be a pedestrian elbow joint node. The second skeleton node location is related to the first skeleton node location and/or the third skeleton node location. For example, the second skeleton node location is a central location between the first skeleton node location and the third skeleton node location. In other words, the second skeleton node location is obtained by averaging the skeleton node locations (the first skeleton node location and the third skeleton node location) of the skeleton node corresponding to a previous frame and a next frame.

For example, at a moment A, skeleton information of the pedestrian is as follows:

$$XA_i = \left( x_{A1}, y_{A1}, x_{A2}, y_{A2}, \cdots, x_{Ak}, y_{Ak}, \cdots x_{A12}, y_{A12} \right);$$

At a moment B, skeleton information of the pedestrian is as follows:

$$X_{Bi} = \left( x_{B1}, y_{B1}, x_{B3}, y_{B3}, \cdots, x_{Bk}, y_{Bk}, \cdots x_{B12}, y_{B12} \right);$$

At a moment C, skeleton information of the pedestrian is as follows:

$$X_{Ci} = \left( x_{C1}, y_{C1}, x_{C2}, y_{C2}, \cdots, x_{Ck}, y_{Ck}, \cdots x_{C12}, y_{C12} \right).$$

It can be learned that, at the moment B, one frame of a skeleton node location $(x_{B2}, y_{B2})$ is lost in the skeleton information of the elbow joint. To supplement the lost skeleton node location $(x_{B2}, y_{B2})$, refer to skeleton node locations of the elbow joint that are in the previous and next frames $(x_{A2}, y_{A2})$ and $(x_{C2}, y_{C2})$. Particularly, the lost skeleton node location may be supplemented according to the following formula:

$$x_{B2} = \frac{x_{A2} + x_{C2}}{2}, y_{B2} = \frac{y_{A2} + y_{C2}}{2}.$$

Optionally, in an embodiment, the terminal device may perform momentary interval sampling on the skeleton node locations of each skeleton node at a plurality of moments, to obtain processed posture information, where the processed posture information is used to obtain the target information that indicates the behavior intent of the target object.

For example, in this embodiment, equal-interval sampling may be performed on the posture information at a plurality of moments, and $(x_1, y_1, x_2, y_2, \cdots, x_i, y_i, \cdots x_n, y_n)$ is set as a skeleton pixel coordinate sequence of a skeleton node, where $n$ may be an even number, $(x_i, y_i)$ are skeleton pixel coordinates of the skeleton node at the $i$th moment, and equal-interval sampling in which $t=2$ may be performed. In this way, the skeleton pixel coordinate sequence becomes $(x_1, y_1, x_3, y_3, \cdots, x_{n-1}, y_{n-1})$.

In this embodiment of this application, to overcome a problem that pedestrian behavior intent prediction precision is greatly reduced because of unobvious difference between skeleton information of different behavior intent types when a collected video frame has a low pixel and some frames have small pedestrian scales, equal-interval sampling may be performed on the posture information at a plurality of moments, to widen a difference between skeleton information of different behavior intent types.

Optionally, in an embodiment, the terminal device may perform normalization processing on the skeleton node locations of each skeleton node at a plurality of moments, to obtain normalized posture information, where the normalized posture information is used to obtain the target information that indicates the behavior intent of the target object.

For example, the following internal normalization may be performed on a time sequence of each skeleton node:

$$x^* = \frac{x - x_{\min}}{x_{\max} - x_{\min}},$$

where

$x_{min}$ is a minimum value of pixel horizontal (vertical) coordinates of a node in the sequence segment, and $x_{max}$ is a maximum value of pixel horizontal (vertical) coordinates of a node in the sequence segment.

In this embodiment of this application, to overcome a problem that pedestrian behavior intent prediction precision is greatly reduced because of unobvious difference between skeleton information of different behavior intent types when a collected video frame has a low pixel and some frames have small pedestrian scales, internal sequence normalization processing may be performed on the skeleton information, to widen a difference between skeleton information of different types, and improve pedestrian intent prediction performance.

In this embodiment of this application, the historical moving track information of the target object may be further obtained. Particularly, the historical moving track information of the pedestrian may be collected by a vehicle sensor (for example, a millimeter-wave radar). In the historical moving track information of the pedestrian, a form of track coordinates of the pedestrian may be $(x_1, y_1, x_2, y_2, \cdots, x_i, y_i, \cdots)$, where $(x_i, y_i)$ are pedestrian location coordinates at an $i^{th}$ moment.

Optionally, in an embodiment, the historical track information includes historical track point locations at a plurality of moments, each moment corresponds to one historical track point location, the historical track point locations at a plurality of moments are represented based on a preset coordinate system, the historical track point locations at a plurality of moments include a first track point location, the first track point location is a track point location of an initial moment in the plurality of moments, and the first track point location is located at a preset location in the preset coordinate system. Particularly, the historical track point location is a location relative to the ground.

In this embodiment of this application, the original historical track of the pedestrian may be preprocessed to obtain a historical track point location in a new coordinate system. Specifically, the historical track point location obtained by the terminal device may be a moving track generated by relative displacement between the terminal device and the vehicle. To resolve a problem that a pedestrian track is interfered with by vehicle movement and restore coordinates of a real historical track of the pedestrian, the vehicle movement displacement may be added to an original pedestrian track. In other words, vehicle displacement compensation is performed on the historical track of the pedestrian, to obtain historical track information relative to the ground.

In this embodiment of this application, to improve pedestrian track prediction precision, a start point of the pedestrian track prediction may be used as a reference origin to perform pedestrian track coordinate transformation. Specifically, the historical track information includes historical track point locations at a plurality of moments, each moment corresponds to one historical track point location, the historical track point locations at a plurality of moments are represented based on a preset coordinate system, the historical track point locations at a plurality of moments include a first track point location, the first track point location may be a track point location of an initial moment in the plurality of moments, or may be a track point location of a last moment in the plurality of moments, and this is not limited herein. The first track point location is located at a preset location in the preset coordinate system, where the preset location may be an origin (0, 0) of the preset coordinate system.

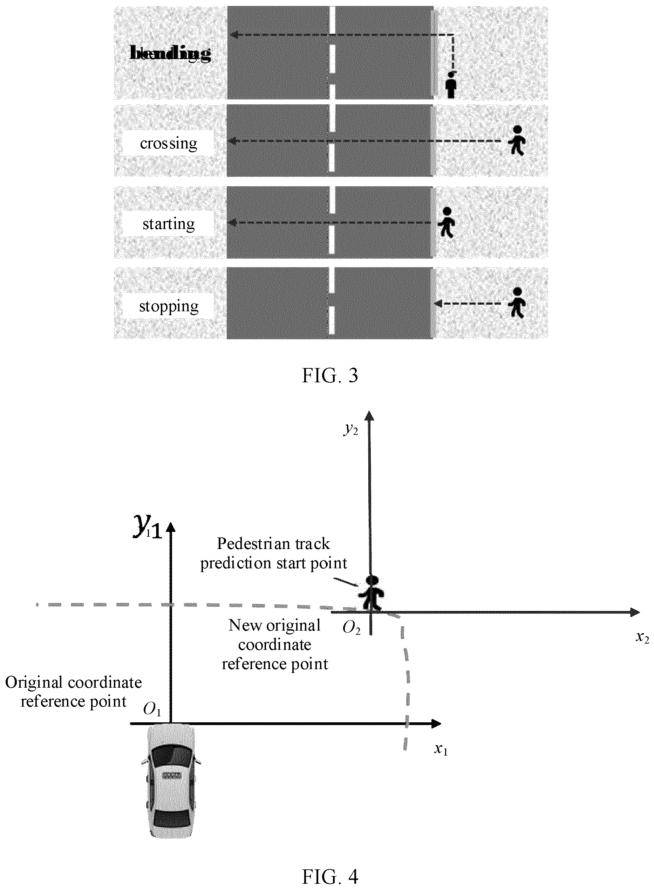

For example, refer to FIG. 4. FIG. 4 is a schematic diagram of processing historical track information according to an embodiment of this application. As shown in FIG. 4, $O_1$ is an origin of a reference coordinate system of a vehicle, $O_2$ is a track point location of a pedestrian at an initial moment, and historical track information of the pedestrian may be represented in a coordinate system that uses the point $O_2$ as a coordinate origin.

Particularly, to reduce impact of noise caused by sensor collection on a pedestrian track, track smoothing processing may be further performed on the obtained historical track information of the pedestrian.

S202: Obtain, based on the posture information, target information that indicates the behavior intent of the target object.

In this embodiment of this application, the terminal device may obtain, by using the posture information as input and by using a recurrent neural network model, the target information that indicates the behavior intent of the target object. The recurrent neural network model may be a long short-term memory (long short-term memory, LSTM) network or a gated recurrent unit GRU. An example in which the recurrent neural network model is the long short-term memory LSTM network is used below for description.

The LSTM is described as follows.

The LSTM algorithm is a recurrent neural network (recurrent neural network, RNN) in a specific form, and the RNN is a general term of a series of neural networks that can process sequence data. The RNN further has many variants, for example, a bidirectional RNN (bidirectional RNN). However, the RNN has great difficulty in dealing with long-term dependencies (nodes that are far away from each other in a time sequence): When connections between the nodes that are far away from each other are being calculated, a plurality of multiplications of Jacobian matrix may be performed, and consequently a problem of gradient disappearance (which frequently occurs) or gradient expansion (which rarely occurs) is caused. To resolve this problem, a gated RNN (Gated RNN) is most widely used, and the LSTM is one of the most famous among the gated RNNs. A leaky element allows, by designing a weight coefficient between connections, the RNN to accumulate long-term connections between nodes that are far away from each other. The gated RNN generalizes this idea, allows the coefficient to be changed at different moments, and allows a network to forget information that has been accumulated. The LSTM is such a gated RNN. The LSTM adds an input gate, a forget gate, and an output gate, so that a self-loop weight changes. In this way, when a model parameter is unchanged, an integral scale may dynamically change at different moments, so that the problem of gradient disappearance or gradient expansion is avoided.

In this embodiment of this application, a pedestrian is an important traffic participant, and prediction of a behavior intent and a future appearance location that are of the pedestrian is of great significance for forward risk evaluation of an intelligent vehicle. Specifically, the terminal device may determine, based on the obtained posture information of the target object, a behavior intent of the pedestrian corresponding to the posture information. The behavior intent may include at least one of the following: changing from a moving state to a stationary state (that is, stopping), maintaining a moving state (that is, crossing), changing from a stationary state to a moving state (that is, starting), or changing from a first moving state to a second moving state (that is, bending), where the first moving state may be understood as moving in a specific area (for example, moving on a sidewalk near a lane edge), and the second moving state may be understood as entering a lane area (for example, crossing a lane). The following describes each behavior intent in detail.

1. Change from a moving state to a stationary state (that is, stopping).

In this embodiment of this application, a behavior intent of the pedestrian may be changing from a moving state to a stationary state. The moving state may be understood as a state in which the pedestrian moves from a sidewalk to a lane edge, and the stationary state may be understood as a state in which the pedestrian stops moving when moving to a lane edge. FIG. 3 is a schematic diagram of a behavior intent of a pedestrian according to an embodiment of this application. As shown in FIG. 3, for the behavior intent of changing from the moving state to the stationary state (that is, stopping), the pedestrian may walk towards the lane edge and stop moving when walking to the road edge.

2. Maintain a moving state (that is, crossing).

In this embodiment of this application, a behavior intent of the pedestrian may be maintaining a moving state (that is, crossing). The moving state may be understood as a state in which the pedestrian maintains moving continuously, for example, moving from a sidewalk to a lane edge and continuously moving to walk to a lane area. As shown in FIG. 3, for the behavior intent of maintaining the moving state (that is, crossing), the pedestrian may move from the sidewalk to the lane and cross the lane. 3. Change from a stationary state to a moving state (that is, starting).

In this embodiment of this application, a behavior intent of the pedestrian may be changing from a stationary state to a moving state (that is, starting). The stationary state may be understood as a state in which the pedestrian is in a stationary state in an area (for example, a lane edge on a side of a sidewalk), and the moving state may be understood as a state in which the pedestrian starts to move from a specific area (for example, walking to a lane area). As shown in FIG. 3, for the behavior intent of changing from the stationary state to the moving state (that is, starting), the pedestrian may start to walk from the lane edge and cross the lane. 4. Change from a first moving state to a second moving state (that is, bending).

In this embodiment of this application, a behavior intent of the pedestrian may be changing from a first moving state to a second moving state (that is, bending). The first moving state may be understood as moving in an area (for example, moving near a lane edge), and the second moving state may be understood as entering a lane area (for example, walking to the lane area). As shown in FIG. 3, for the behavior intent of changing from the first moving state to the second moving state (that is, bending), the pedestrian may walk along the lane edge and then cross the lane.

For example, the behavior intent includes four types: changing from a moving state to a stationary state, maintaining a moving state, changing from a stationary state to a moving state, and changing from a first moving state to a second moving state.

Input of the LSTM network is a preprocessed pedestrian skeleton node information sequence (the posture information). In the LSTM network, the following skeleton sequence feature vector is obtained by calculating the preprocessed skeleton node information sequence, that is:

$$out = \left( 0_1, 0_2, 0_3, 0_4 \right),$$

where

$(0_1, 0_2, 0_3, 0_4)$ represent sub-vectors that are of four types of pedestrian behavior intents (changing from a stationary state to a moving state, that is, bending; maintaining a moving state, that is, crossing; changing from a stationary state to a moving state, that is, starting; and changing from a moving state to a stationary state, that is, stopping) and that are obtained by inputting the skeleton node information sequence into the LSTM network. The skeleton sequence feature vector *out* is converted, by using a softmax function, into a probability distribution $P=(p_1, p_2, p_3, p_4)$ about four types of pedestrian behavior intents. For example, the softmax function is used to obtain an expression of the probability distribution $P$, and the expression may be the following formula:

$$P_i = \frac{e^{o_i}}{\sum_j j e^{o_j}},$$

where

$O_i$ is a sub-vector that is in the skeleton feature vector *out* and that is of the $i^{th}$ type of intent, and $P_i$ is a probability that the skeleton sequence feature vector belongs to the $i^{th}$ type of intent. A behavior intent type that has a maximum probability in the probability distribution $(p_1,p_2,p_3,p_4)$ is used as the behavior intent of the target object.

In this embodiment of this application, the terminal device may obtain, based on the posture information, the target information that indicates the behavior intent of the target object. The target information may be an identifier indicating the behavior intent of the target object or other information that may uniquely indicate the behavior intent.

In this embodiment of this application, when the LSTM network used to predict the behavior intent of the pedestrian is trained, a cross entropy loss function may be used. In other words, the LSTM network is trained by using the following loss function:

$$H(p,q) = \sum_x p(x) \log \frac{1}{q(x)},$$

where

$p(x)$ and $q(x)$ may respectively represent a real probability distribution and a predicted probability distribution that are of the input x. The closer the predicted probability distribution is to the real probability distribution, the smaller the loss is. It should be noted that the foregoing loss function is merely an example, and constitutes no limitation on this application.

S203: Obtain a predicted track of the target object by using a track prediction model and by using the target information and the historical track information as input.

In this embodiment of this application, after obtaining the target information that indicates the behavior intent of the target object and the historical moving track information, the terminal device may obtain the predicted track of the target object by using the track prediction model and by using the target information and the historical track information as input.

Specifically, in this embodiment of this application, the terminal device may obtain the predicted track of the target object by using the recurrent neural network model and by using the target information and the historical track information as input. The following uses an example in which the recurrent neural network is the LSTM network for description.

Input of the LSTM network is the historical track information and the target information. The input information is converted, by using an encoding layer of the LSTM network, into an output vector $out_b$ of the encoding layer, a decoding layer of the LSTM network maps the output vector $out_b$ of the encoding layer to the predicted track of the pedestrian, and the predicted track may include predicted track coordinates. For example, the predicted track may be $(x_1,y_1,x_2,y_2,\cdots,x_i,y_i,\cdots x_p,y_p)$, where $(x_i,y_i)$ are predicted pedestrian location coordinates at an $i^{th}$ future moment, and $p$ is a moment length of the predicted future track.

In this embodiment of this application, a mean square error (mean square error, MSE) may be used as a loss function when the LSTM network used to predict a pedestrian track is trained. For example, an expression of the mean square error may be the following function:

$$MSE = \frac{1}{M} \sum_{m=1}^{M} \left( x_m - \hat{x}_m \right)^2 + \left( y_m - \hat{y}_m \right)^2,$$

where

$M$ is a quantity of training samples, $(x_m,y_m)$ is an average value of predicted location coordinates at a plurality of future moments, where the average value is of the $m^{th}$ sample and is obtained by using a pedestrian track prediction network (the LSTM network), and $(\hat{x}_m,\hat{y}_m)$ is an average value of corresponding real location coordinates at a plurality of future moments. The closer the predicted future coordinates are to the real future coordinates, the smaller the mean square error MSE is. In other words, the loss is smaller. It should be noted that the foregoing loss function is merely an example, and constitutes no limitation on this application.

For example, the following describes an example of pedestrian track prediction.

It is assumed that a historical moment length is 32 (2s), and a future moment length is 16 (1s). CNN skeleton fitting is performed on the pedestrian video stream to obtain a skeleton node information sequence of the pedestrian, and the skeleton information sequence is $X = (X_1, \cdots, X_i, \cdots, X_{32})$, where $X_i$ is a location of each skeleton node of the pedestrian at the $i$ th moment, $X_i = (x_1, y_1, x_2, y_2, \cdots, x_k, y_k, \cdots x_{12}, y_{12})$, and $k$ is a skeleton node index. The interpolation supplement processing described in the foregoing embodiment is performed on the lost pedestrian skeleton information, the interval sampling processing in which t=2 and that is described in the foregoing embodiment is performed on the pedestrian skeleton information of the sequence, and the internal sequence normalization processing described in the foregoing embodiment is performed on the pedestrian skeleton information sequence of the sequence.

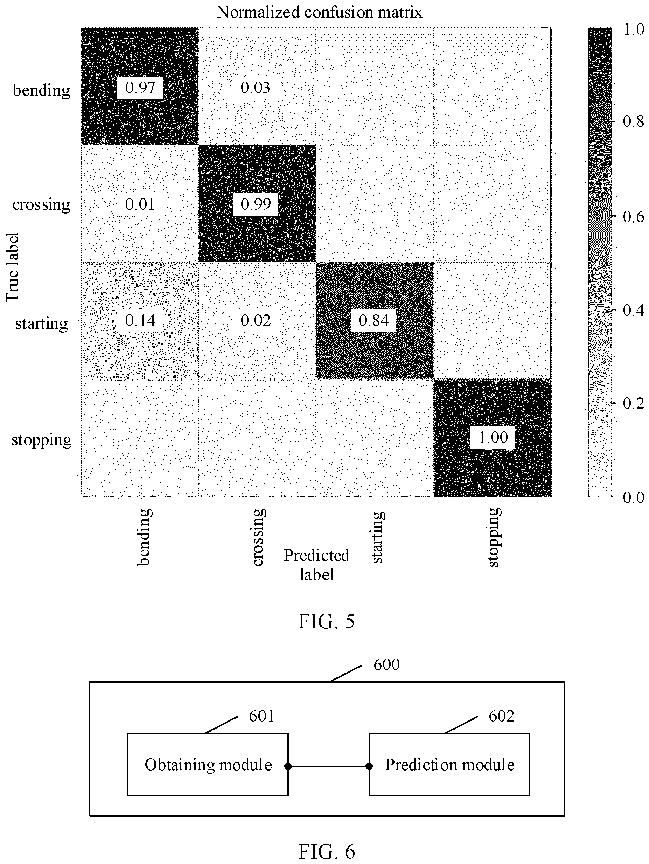

The preprocessed pedestrian skeleton information sequence needs to be input into a trained LSTM pedestrian intent recognition model to obtain a predicted pedestrian intent. The LSTM pedestrian intent recognition model may be a single-layer LSTM model, and an input data dimension is (batch_size, 32, 24), where batch_size is an amount of data to be processed in a batch. In this embodiment, batch size may be equal to 1, 32 is a historical moment length of the skeleton feature, and 24 is a skeleton feature dimension at each moment. Prediction accuracy of the model in a case of 219 test samples is 95.43%, and an obtained confusion matrix is shown in FIG. 5. FIG. 5 is a schematic diagram of a confusion matrix according to an embodiment of this application. Output obtained by inputting the preprocessed skeleton information sequence into the LSTM pedestrian intent prediction network is pedestrian intent prediction probability distribution $P = (p_1, p_2, p_3, p_4)$, and a behavior intent type that has a maximum probability in the probability distribution $(p_1, p_2, p_3, p_4)$ is used as the behavior intent of the target object. In this embodiment, a behavior intent type obtained by inputting the skeleton information sequence into the intent identification model is 3 (where bending is represented by 1, crossing is represented by 2, starting is represented by 3, and stopping is represented by 4).

Next, vehicle displacement compensation, track smoothing processing, and track coordinate transformation are performed on the historical pedestrian track information corresponding to the pedestrian skeleton information sequence, to obtain historical pedestrian coordinates $Y = (x_1, y_1, x_2, y_2, \cdots, x_k, y_k, \cdots x_{32}, y_{32})$ in a new coordinate system.

The predicted target information intention that indicates the behavior intent of the pedestrian and the corresponding preprocessed historical pedestrian track information are used together as input of the trained LSTM pedestrian track prediction model. A joint input form of the historical track information and the target information intention may be $(x_1, y_1, intention, \cdots, x_i, y_i, intention, \cdots x_{32}, y_{32}, intention)$. Therefore, an input data dimension is (batch size, 32, 3), where batch size is an amount of data to be processed in a batch. In this embodiment, batch size is equal to 1, 32 is a historical moment length of the track information, and 3 is coordinates at each moment and a data dimension of an intent feature. The input intent feature information and the input historical track information are encoded by the LSTM to obtain an output vector $out_b$ of the encoding layer. The decoding layer of the LSTM network maps the output vector $out_b$ of the encoding layer to a predicted track of the pedestrian, to obtain predicted location coordinates of the pedestrian at the future 16 moments. The predicted location coordinates of the pedestrian at the future 16 moments may be shown in Table 1.

**Table 1: Predicted future track coordinates of a pedestrian with a starting intent**

| Moment | 1 | 2 | 3 | 4 | ... | 13 | 14 | 15 | 16 |
|---|---|---|---|---|---|---|---|---|---|
| X(m) | -0.0650 | -0.1377 | -0.2089 | -0.2784 | ... | -0.9294 | -1.0080 | -1.0872 | -1.1668 |
| Y(m) | -0.0016 | -0.0068 | -0.0049 | -0.0014 | ... | 0.0098 | 0.0144 | 0.0196 | 0.0255 |

In this embodiment, prediction performance of the track prediction model may be measured by using a mean absolute error MAE. Specifically, a value of a quantity M of test samples is 1, and mean absolute errors MAEs corresponding to the 16 moments are shown in Table 2.

**Table 2: Mean absolute error of pedestrian track prediction**

| Moment | 1 | 2 | 3 | 4 | ... | 13 | 14 | 15 | 16 |
|---|---|---|---|---|---|---|---|---|---|
| MAE(m) | 0.0158 | 0.0496 | 0.0899 | 0.1133 | ... | 0.1398 | 0.1416 | 0.1599 | 0.1796 |

Embodiments of this application provide a track prediction method, and the method includes: obtaining posture information and historical moving track information that are of a target object; obtaining, based on the posture information, target information that indicates a behavior intent of the target object; and obtaining a predicted track of the target object by using a track prediction model and by using the target information and the historical track information as input. In the foregoing manner, the behavior intent of the pedestrian is used as one of input features for pedestrian track prediction, so that a pedestrian track prediction error can be reduced, pedestrian track prediction performance can be improved, a prior-art problem of inaccurate prediction of a pedestrian moving track can be resolved, and vehicle control safety is improved.

The foregoing mainly describes the solutions provided in embodiments of the present invention from a perspective of the terminal device. It may be understood that, to implement the foregoing functions, the terminal device includes corresponding hardware structures and/or software modules for performing the functions. With reference to units and algorithm steps of each example described in the embodiments disclosed in the present invention, embodiments of the present invention may be implemented in a form of hardware or a combination of hardware and computer software. Whether a function is performed by hardware or hardware driven by computer software depends on a particular application and a design constraint condition that are of the technical solutions. A person skilled in the art may use different methods for each particular application to implement the described functions, but it should not be construed that the implementation goes beyond the scope of the technical solutions of embodiments of the present invention. In embodiments of the present invention, the terminal device may be divided into function units based on the foregoing method examples. For example, each function unit may be obtained through division based on a corresponding function, or two or more functions may be integrated into one processing unit. The integrated unit may be implemented in a form of hardware, or may be implemented in a form of a software functional unit. It should be noted that, in embodiments of the present invention, unit division is merely an example, and is merely logical function division. In an actual implementation, another division manner may be used.

When an integrated unit is used, FIG. 6 shows a possible schematic diagram of a structure of the terminal device described in the foregoing embodiments. A terminal device 600 includes: an obtaining module 601, configured to: obtain posture information and historical motion trail information that are of a target object, and obtain, based on the posture information, target information that indicates a behavior intent of the target object; and a prediction module 602, configured to obtain a predicted track of the target object by using a track prediction model and by using the target information and the historical track information as input.

Optionally, the behavior intent includes at least one of the following: changing from a moving state to a stationary state, maintaining a moving state, changing from a stationary state to a moving state, and changing from a first moving state to a second moving state.

Optionally, the target object includes a plurality of skeleton nodes, and the posture information includes skeleton node locations of each skeleton node at a plurality of moments.

Optionally, the target object includes a first skeleton node; the posture information includes a first skeleton node location, a second skeleton node location, and a third skeleton node location; the first skeleton node location is a location of the first skeleton node of the target object at a first moment; the third skeleton node location is a location of the first skeleton node of the target object at a third moment; the second skeleton node location corresponds to a location of the first skeleton node of the target object at a second moment; the first moment, the second moment, and the third moment are successively adjacent moments in a time dimension; and the second skeleton node location is related to the first skeleton node location and/or the third skeleton node location.

Optionally, the second skeleton node location is a central location between the first skeleton node location and the third skeleton node location.

Optionally, the terminal device 600 further includes a sampling module, configured to perform momentary interval sampling on the skeleton node locations of each skeleton node at a plurality of moments to obtain processed posture information, where the processed posture information is used to obtain the target information that indicates the behavior intent of the target object.

Optionally, the terminal device 600 further includes a normalization module, configured to perform normalization processing on the skeleton node locations of each skeleton node at a plurality of moments to obtain normalized posture information, where the normalized posture information is used to obtain the target information that indicates the behavior intent of the target object.

Optionally, the obtaining module 601 is specifically configured to obtain, by using the long short-term memory network LSTM, the target information that indicates the behavior intent of the target object.

Optionally, the historical track information includes historical track point locations at a plurality of moments, each moment corresponds to one historical track point location, the historical track point locations at a plurality of moments are represented based on a preset coordinate system, the historical track point locations at a plurality of moments include a first track point location, the first track point location is a track point location of an initial moment in the plurality of moments, and the first track point location is located at a preset location in the preset coordinate system. Optionally, the historical track point location is a location relative to the ground.

Optionally, the prediction module 602 is specifically configured to: obtain an output vector by using the recurrent neural network model and by using the target information and the historical track information as input, and map the output vector to the predicted track of the target object.

Optionally, the terminal device 600 may further include a storage unit, configured to store program code and data that are of the terminal device 600.

In this embodiment of this application, the prediction module 601 may be integrated into a processing module, where the processing module may be a processor or a controller. For example, the processing module may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processing module may implement or execute various examples of logical blocks, modules, and circuits described with reference to content disclosed in the present invention. The processor may alternatively be a combination of processors implementing a computing function, for example, a combination of one or more microprocessors or a combination of a DSP and a microprocessor.

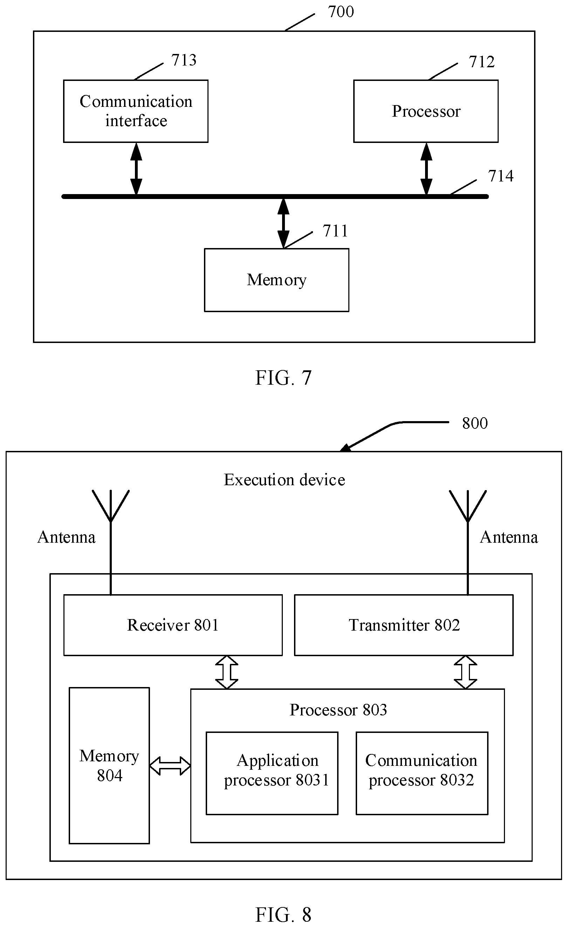

FIG. 7 is a schematic diagram of a structure of another terminal device 700 according to an embodiment of this application.

As shown in FIG. 7, the terminal device 700 includes a processor 712, a communication interface 713, and a memory 77. Optionally, the terminal device 700 may further include a bus 714. The communication interface 713, the processor 712, and the memory 77 may be connected to each other by using the bus 714. The bus 714 may be a peripheral component interconnect (peripheral component interconnect, PCI) bus, an extended industry standard architecture (extended industry standard architecture, EISA) bus, or the like. The bus 714 may be classified into an address bus, a data bus, a control bus, and the like. For ease of representation, only one thick line is used to represent the bus in FIG. 7, but this does not mean that there is only one bus or only one type of bus.

The processor 712 may perform the following steps:

obtaining posture information and historical moving track information that are of a target object;
obtaining, based on the posture information, target information that indicates a behavior intent of the target object; and
obtaining a predicted track of the target object by using a track prediction model and by using the target information and the historical track information as input.

Optionally, the behavior intent includes at least one of the following:
changing from a moving state to a stationary state, maintaining a moving state, changing from a stationary state to a moving state, and changing from a first moving state to a second moving state.

Optionally, the target object includes a plurality of skeleton nodes, and the posture information includes skeleton node locations of each skeleton node at a plurality of moments.

Optionally, the target object includes a first skeleton node; the posture information includes a first skeleton node location, a second skeleton node location, and a third skeleton node location; the first skeleton node location is a location of the first skeleton node of the target object at a first moment; the third skeleton node location is a location of the first skeleton node of the target object at a third moment; the second skeleton node location corresponds to a location of the first skeleton node of the target object at a second moment; the first moment, the second moment, and the third moment are successively adjacent moments in a time dimension; and the second skeleton node location is related to the first skeleton node location and/or the third skeleton node location.

Optionally, the second skeleton node location is a central location between the first skeleton node location and the third skeleton node location.

Optionally, the processor 712 may perform the following steps:
performing momentary interval sampling on the skeleton node locations of each skeleton node at a plurality of moments, to obtain processed posture information, where the processed posture information is used to obtain the target information that indicates the behavior intent of the target object.

Optionally, the processor 712 may perform the following steps:
performing normalization processing on the skeleton node locations of each skeleton node at a plurality of moments, to obtain normalized posture information, where the normalized posture information is used to obtain the target information that indicates the behavior intent of the target object.

Optionally, the processor 712 may perform the following steps:
obtaining, by using the posture information as input and by using a recurrent neural network model, the target information that indicates the behavior intent of the target object.

Optionally, the historical track information includes historical track point locations at a plurality of moments, each moment corresponds to one historical track point location, the historical track point locations at a plurality of moments are represented based on a preset coordinate system, the historical track point locations at a plurality of moments include a first track point location, the first track point location is a track point location of an initial moment in the plurality of moments, and the first track point location is located at a preset location in the preset coordinate system. Optionally, the historical track point location is a location relative to the ground.

Optionally, the processor 712 may perform the following steps:

obtaining an output vector by using the recurrent neural network model and by using the target information and the historical track information as input; and

mapping the output vector to the predicted track of the target object.

For specific implementation of the terminal device shown in FIG. 7, correspondingly refer to corresponding descriptions in the foregoing embodiment. Details are not described herein again.

The following describes an execution device according to an embodiment of this application. Refer to FIG. 8. FIG. 8 is a schematic diagram of a structure of an execution device according to an embodiment of this application. The terminal device described in the embodiment corresponding to FIG. 6 or FIG. 7 may be deployed on an execution device 800, to implement functions of the terminal device in the embodiments corresponding to FIG. 6 and FIG. 7. Specifically, the execution device 800 includes a receiver 801, a transmitter 802, a processor 803, and a memory 804 (there may be one or more processors 803 in the execution device 800, and one processor is used as an example in FIG. 8). The processor 803 may include an application processor 8031 and a communication processor 8032. In some embodiments of this application, the receiver 801, the transmitter 802, the processor 803, and the memory 804 may be connected by using a bus or in another manner.

The memory 804 may include a read-only memory and a random access memory, and provide instructions and data to the processor 803. A part of the memory 804 may further include a non-volatile random access memory (non-volatile random access memory, NVRAM). The memory 804 stores a processor and operation instructions, an executable module or a data structure, or a subset thereof, or an extended set thereof. The operation instructions may include various operation instructions used to implement various operations.

The processor 803 controls an operation of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 803, or may be implemented by the processor 803. The processor 803 may be an integrated circuit chip and has a signal processing capability. In an implementation process, the steps in the foregoing methods may be completed by using a hardware integrated logic circuit in the processor 803, or by using instructions in a form of software. The processor 803 may be a general-purpose processor, a digital signal processor (digital signal processor, DSP), a microprocessor, or a microcontroller. The processor 803 may further include an application-specific integrated circuit (application specific integrated circuit, ASIC), a field programmable gate array (field-programmable gate array, FPGA) or another programmable logic device, a discrete gate, or a transistor logic device, or a discrete hardware component. The processor 803 may implement or perform the methods, the steps, and the logical block diagrams disclosed in embodiments of this application. The general-purpose processor may be a microprocessor, or the processor may be any conventional processor, or the like. Steps of the methods disclosed with reference to embodiments of this application may be directly performed and completed by using a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 804, and the processor 803 reads information in the memory 804 and completes the steps of the foregoing methods in combination with hardware of the processor 803.

The receiver 801 may be configured to receive input digit or character information, and generate signal input related to a related setting and function control of the execution device. The transmitter 802 may be configured to output digit or character information through a first interface. The transmitter 802 may be further configured to send instructions to a disk group through the first interface, to modify data in the disk group.

An embodiment of this application further provides a computer program product. When the computer program product is run on a computer, the computer is enabled to perform the steps performed by the terminal device in the method described in the embodiment shown in FIG. 6 or FIG. 7.

An embodiment of this application further provides a computer-readable storage medium. The computer-readable storage medium stores a program used for signal processing. When the program is run on a computer, the computer is enabled to perform the steps performed by the terminal device in the method described in the embodiment shown in FIG. 6 or FIG. 7.

The execution device or the terminal device that is provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip in the execution device is enabled to perform the track prediction method described in the embodiment shown in FIG. 2. Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random access memory (random access memory, RAM)

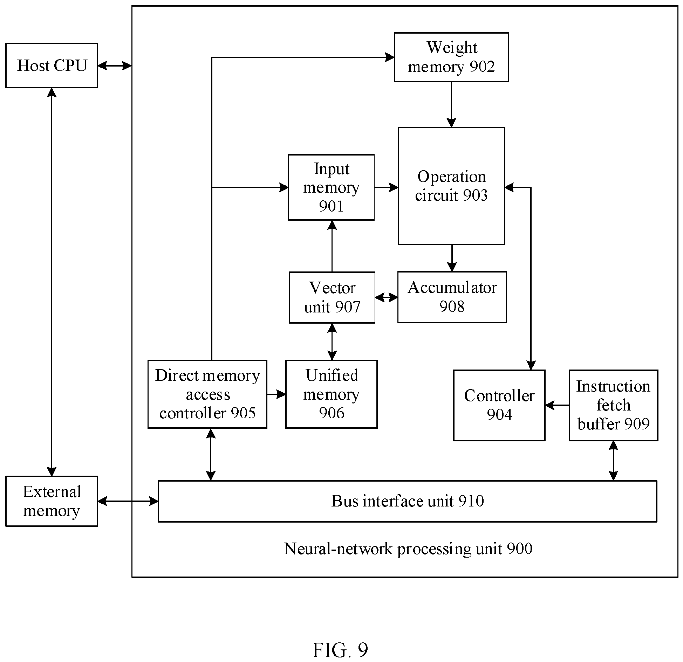

Specifically, refer to FIG. 9. FIG. 9 is a schematic diagram of a structure of a chip according to an embodiment of this application. The chip may be represented as a neural-network processing unit NPU 900. The NPU 900 is mounted to a host CPU (Host CPU) as a coprocessor, and the host CPU allocates a task. A core part of the NPU is an operation circuit. A controller 904 controls an operation circuit 903 to extract matrix data in a memory and perform a multiplication operation.

In some implementations, the operation circuit 903 internally includes a plurality of processing units (Process Engine, PE). In some implementations, the operation circuit 903 is a two-dimensional systolic array. The operation circuit 903 may alternatively be a one-dimensional systolic array or another electronic circuit that can perform mathematical operations such as multiplication and addition. In some implementations, the operation circuit 903 is a general-purpose matrix processor.

For example, it is assumed that there are an input matrix A, a weight matrix B, and an output matrix C. The operation circuit fetches data corresponding to the matrix B from a weight memory 902, and buffers the data in each PE in the operation circuit. The operation circuit fetches data of the matrix A from an input memory 901, to perform a matrix operation on the matrix B, and stores an obtained partial result or an obtained final result of the matrix into an accumulator (accumulator) 908.

A unified memory 906 is configured to store input data and output data. Weight data is directly transferred to the weight memory 902 by using a direct memory access controller (Direct Memory Access Controller, DMAC) 905. The input data is also transferred to the unified memory 906 by using the DMAC.

BIU is a Bus Interface Unit, that is, a bus interface unit 910. The bus interface unit 910 is configured to perform interaction between an AXI bus and the DMAC and between the AXI bus and an instruction fetch buffer (Instruction Fetch Buffer, IFB) 909.

The bus interface unit 910 (Bus Interface Unit, BIU for short) is used by the instruction fetch buffer 909 to obtain instructions from an external memory, and is further used by the direct memory access controller 905 to obtain original data of the input matrix A or the weight matrix B from the external memory.

The DMAC is mainly configured to transfer input data in an external memory DDR to the unified memory 906, or transfer the weight data to the weight memory 902, or transfer the input data to the input memory 901.

A vector unit 907 includes a plurality of operation processing units. If necessary, the vector unit 907 performs further processing, such as vector multiplication, vector addition, an exponential operation, a logarithm calculation, and size comparison, on output of the operation circuit. The vector unit 907 is mainly configured to perform network computing, such as Batch Normalization (batch normalization), pixel-level summation, and upsampling for a feature map, on a non-convolutional/fully-connected layer in a neural network.

In some implementations, the vector unit 907 can store a processed output vector in the unified memory 906. For example, the vector unit 907 may apply a linear function and/or a non-linear function to output of the operation circuit 903, for example, performing linear interpolation on a feature map extracted by a convolutional layer, and for another example, a vector of an accumulated value, to generate an activation value. In some implementations, the vector unit 907 generates a normalized value, a pixel-level summation value, or both. In some implementations, the processed output vector can be used as an activation input of the operation circuit 903, for example, can be used in a subsequent layer in the neural network.

The instruction fetch buffer (instruction fetch buffer) 909 connected to the controller 904 is configured to store instructions used by the controller 904.

The unified memory 906, the input memory 901, the weight memory 902, and the instruction fetch buffer 909 are all On-Chip memories. The external memory is private to the NPU hardware architecture.

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiments are merely examples. The units described as separate parts may or may not be physically separate, and parts displayed as units may or may not be physical units. In other words, the parts may be located in one location, or may be distributed on a plurality of network units. Some or all the modules may be selected based on an actual requirement to achieve the objectives of the solutions of the embodiments. In addition, in the accompanying drawings of the apparatus embodiments provided in this application, connection relationships between modules indicate that the modules have communication connections with each other. The communication connections may be specifically implemented as one or more communication buses or signal cables.

Based on the description in the foregoing implementations, a person skilled in the art may clearly understand that this application may be implemented by using software in combination with necessary universal hardware, or certainly, may be implemented by using dedicated hardware, including an application-specific integrated circuit, a dedicated CPU, a dedicated memory, a dedicated component, or the like. Usually, all functions completed by a computer program may be easily implemented by using corresponding hardware, and a specific hardware structure used to implement a same function may also be in various forms, for example, a form of an analog circuit, a digital circuit, or a dedicated circuit. However, for this application, software program implementation is a better implementation in most cases. Based on such an understanding, the technical solutions of this application essentially or the part that contributes to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement embodiments, embodiments may be implemented completely or partially in a form of a computer program product.

The computer program product includes one or more computer instructions. When the computer program instructions are loaded and executed on a computer, all or some of the procedures or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

## Claims

1. A track prediction method, wherein the method comprises:

   obtaining posture information and historical moving track information that are of a target object;
   obtaining, based on the posture information, target information that indicates a behavior intent of the target object; and
   obtaining a predicted track of the target object by using a track prediction model and by using the target information and the historical track information as input.

2. The method according to claim 1, wherein the behavior intent comprises at least one of the following: changing from a moving state to a stationary state, maintaining a moving state, changing from a stationary state to a moving state, and changing from a first moving state to a second moving state.

3. The method according to claim 1 or 2, wherein the target object comprises a plurality of skeleton nodes, and the posture information comprises skeleton node locations of each skeleton node at a plurality of moments.

4. The method according to claim 3, wherein the target object comprises a first skeleton node; the posture information comprises a first skeleton node location, a second skeleton node location, and a third skeleton node location; the first skeleton node location is a location of the first skeleton node of the target object at a first moment; the third skeleton node location is a location of the first skeleton node of the target object at a third moment; the second skeleton node location corresponds to a location of the first skeleton node of the target object at a second moment; the first moment, the second moment, and the third moment are successively adjacent moments in a time dimension; and the second skeleton node location is related to the first skeleton node location and/or the third skeleton node location.

5. The method according to claim 4, wherein the second skeleton node location is a central location between the first skeleton node location and the third skeleton node location.

**6.** The method according to claim 3 or 4, wherein the method further comprises:
performing momentary interval sampling on the skeleton node locations of each skeleton node at a plurality of moments, to obtain processed posture information, wherein the processed posture information is used to obtain the target information that indicates the behavior intent of the target object.

**7.** The method according to any one of claims 3 to 5, wherein the method further comprises:
performing normalization processing on the skeleton node locations of each skeleton node at a plurality of moments, to obtain normalized posture information, wherein the normalized posture information is used to obtain the target information that indicates the behavior intent of the target object.

**8.** The method according to any one of claims 1 to 7, wherein the obtaining, based on the posture information, target information that indicates a behavior intent of the target object comprises:
obtaining, by using the posture information as input and by using a recurrent neural network model, the target information that indicates the behavior intent of the target object.

**9.** The method according to any one of claims 1 to 8, wherein the historical track information comprises historical track point locations at a plurality of moments, each moment corresponds to one historical track point location, the historical track point locations at a plurality of moments are represented based on a preset coordinate system, the historical track point locations at a plurality of moments comprise a first track point location, and the first track point location is located at a preset location in the preset coordinate system.

**10.** The method according to claim 9, wherein the historical track point location is a location relative to the ground.

**11.** The method according to any one of claims 1 to 10, wherein the obtaining a predicted track of the target object by using a track prediction model and by using the target information and the historical track information as input comprises:
obtaining the predicted track of the target object by using the recurrent neural network model and by using the target information and the historical track information as input.

**12.** An execution device, comprising:

an obtaining module, configured to: obtain posture information and historical moving track information that are of a target object, and
obtain, based on the posture information, target information that indicates a behavior intent of the target object; and
a prediction module, configured to obtain a predicted track of the target object by using a track prediction model and by using the target information and the historical track information as input.

**13.** The execution device according to claim 12, wherein the behavior intent comprises at least one of the following:
changing from a moving state to a stationary state, maintaining a moving state, changing from a stationary state to a moving state, and changing from a first moving state to a second moving state.

**14.** The execution device according to claim 12 or 13, wherein the target object comprises a plurality of skeleton nodes, and the posture information comprises skeleton node locations of each skeleton node at a plurality of moments.

**15.** The execution device according to claim 14, wherein the target object comprises a first skeleton node; the posture information comprises a first skeleton node location, a second skeleton node location, and a third skeleton node location; the first skeleton node location is a location of the first skeleton node of the target object at a first moment; the third skeleton node location is a location of the first skeleton node of the target object at a third moment; the second skeleton node location corresponds to a location of the first skeleton node of the target object at a second moment; the first moment, the second moment, and the third moment are successively adjacent moments in a time dimension; and the second skeleton node location is related to the first skeleton node location and/or the third skeleton node location.

**16.** The execution device according to claim 15, wherein the second skeleton node location is a central location between the first skeleton node location and the third skeleton node location.

**17.** The execution device according to claim 14 or 15, further comprising:

a sampling module, configured to perform momentary interval sampling on the skeleton node locations of each skeleton node at a plurality of moments, to obtain processed posture information, wherein the processed posture information is used to obtain the target information that indicates the behavior intent of the target object.

18. The execution device according to any one of claims 14 to 16, further comprising:
a normalization module, configured to perform normalization processing on the skeleton node locations of each skeleton node at a plurality of moments, to obtain normalized posture information, wherein the normalized posture information is used to obtain the target information that indicates the behavior intent of the target object.

19. The execution device according to any one of claims 12 to 18, wherein the obtaining module is specifically configured to:
obtain, by using the posture information as input and by using a recurrent neural network model, the target information that indicates the behavior intent of the target object.

20. The execution device according to any one of claims 12 to 19, wherein the historical track information comprises historical track point locations at a plurality of moments, each moment corresponds to one historical track point location, the historical track point locations at a plurality of moments are represented based on a preset coordinate system, the historical track point locations at a plurality of moments comprise a first track point location, and the first track point location is located at a preset location in the preset coordinate system.

21. The execution device according to claim 20, wherein the historical track point location is a location relative to the ground.

22. The execution device according to any one of claims 12 to 21, wherein the prediction module is specifically configured to:
obtain the predicted track of the target object by using the recurrent neural network model and by using the target information and the historical track information as input.

23. A terminal device, comprising a memory, a communication interface, and a processor coupled to the memory and the communication interface, wherein the memory is configured to store instructions, the processor is configured to execute the instructions, the communication interface is configured to communicate with a target vehicle under control of the processor, and when the processor executes the instructions, the processor performs the method according to any one of claims 1 to 11.

24. A computer-readable storage medium, wherein the computer-readable storage medium stores a computer program, and when the computer program is executed by a processor, the method according to any one of claims 1 to 11 is implemented.

Intelligent information chain

Intelligent product and industry application

| Translation/Text analysis/... | Voice/Vision/Image/... |

| Data | Data processing: | Data training/ Machine learning/ Deep learning | Search/Inference/ Decision-making | ... |

| Infrastructure | Sensor | Intelligent chip | Basic platform | ... |

IT value chain

FIG. 1A

Terminal device

| Environment perception module 102 | Planning and decision-making module 104 | Control processing module 106 |

FIG. 1B

**Terminal device**
**100**

FIG. 1C

FIG. 1D

| | |
|---|---|
| Obtain posture information and historical moving track information that are of a target object | 201 |
| Obtain, based on the posture information, target information that indicates a behavior intent of the target object | 202 |
| Obtain a predicted track of the target object by using a track prediction model and by using the target information and the historical track information as input | 203 |

FIG. 2

FIG. 3

FIG. 4

Normalized confusion matrix

FIG. 5

FIG. 6

700

```
┌─────────────────────────────────────────────────────────┐
│                                                         │
│   ┌──── 713                        ┌──── 712            │
│   ┌─────────────────┐              ┌─────────────────┐  │
│   │  Communication  │              │                 │  │
│   │    interface    │              │    Processor    │  │
│   └─────────────────┘              └─────────────────┘  │
│           ↕                                 ↕           │
│                                          ┌──── 714      │
│  ═══════════════════════════════════════════════════   │
│                        ↕                                │
│                     ┌──── 711                           │
│              ┌─────────────────┐                        │
│              │                 │                        │
│              │     Memory      │                        │
│              └─────────────────┘                        │
│                                                         │
└─────────────────────────────────────────────────────────┘
```

FIG. 7

800

```
┌───────────────────────────────────────────────────────────┐
│                    Execution device                        │
│                                                            │
│   Antenna                              Antenna             │
│     │                                     │                │
│  ┌──┴──────────────────────────────────────┴───────────┐  │
│  │ ┌──────────────────┐      ┌──────────────────┐       │  │
│  │ │  Receiver 801    │      │ Transmitter 802  │       │  │
│  │ └──────────────────┘      └──────────────────┘       │  │
│  │          ⇕                         ⇕                  │  │
│  │ ┌────────┐  ┌─────────────────────────────────────┐  │  │
│  │ │        │  │         Processor 803               │  │  │
│  │ │ Memory │  │ ┌──────────────┐ ┌───────────────┐  │  │  │
│  │ │  804   │⇔ │ │ Application  │ │ Communication │  │  │  │
│  │ │        │  │ │processor 8031│ │processor 8032 │  │  │  │
│  │ │        │  │ └──────────────┘ └───────────────┘  │  │  │
│  │ └────────┘  └─────────────────────────────────────┘  │  │
│  └──────────────────────────────────────────────────────┘  │
└───────────────────────────────────────────────────────────┘
```

FIG. 8

FIG. 9

## INTERNATIONAL SEARCH REPORT

| International application No. |
|---|
| **PCT/CN2019/129820** |

| A. | CLASSIFICATION OF SUBJECT MATTER |
|---|---|

B60W 30/095(2012.01)i

According to International Patent Classification (IPC) or to both national classification and IPC

| B. | FIELDS SEARCHED |
|---|---|

Minimum documentation searched (classification system followed by classification symbols)

B60W,G06K

Documentation searched other than minimum documentation to the extent that such documents are included in the fields searched

Electronic data base consulted during the international search (name of data base and, where practicable, search terms used)

WPI; EPODOC; CNPAT; CNKI; IEEE: 轨迹, 预测, 目标, 对象, 行人, 姿态, 姿势, 历史, 运动, 行为, 意图, 模型, 神经网络, movement, behavior, intent, neural, network, history, goer, locus, forecast, target, gesture

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110293968 A (BAIDU ONLINE NETWORK TECHNOLOGY (BEIJING) CO., LTD.) 01 October 2019 (2019-10-01)<br>description, paragraphs [0031]-[0139] | 1-24 |
| A | CN 109969172 A (HUAWEI TECHNOLOGIES CO., LTD.) 05 July 2019 (2019-07-05)<br>entire document | 1-24 |
| A | CN 110622226 A (NISSAN MOTOR CO., LTD.) 27 December 2019 (2019-12-27)<br>entire document | 1-24 |
| A | CN 106428000 A (TSINGHUA UNIVERSITY et al.) 22 February 2017 (2017-02-22)<br>entire document | 1-24 |
| A | US 2019205629 A1 (BEIJING KUANGSHI TECHNOLOGY CO., LTD.) 04 July 2019 (2019-07-04)<br>entire document | 1-24 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2020** | **27 September 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/129820**

| Patent document cited in search report | | | Publication date (day/month/year) | Patent family member(s) | | | Publication date (day/month/year) |
|---|---|---|---|---|---|---|---|
| CN | 110293968 | A | 01 October 2019 | None | | | |
| CN | 109969172 | A | 05 July 2019 | None | | | |
| CN | 110622226 | A | 27 December 2019 | EP | 3627470 | A1 | 25 March 2020 |
| | | | | US | 2020164873 | A1 | 28 May 2020 |
| | | | | WO | 2018211582 | A1 | 22 November 2018 |
| | | | | RU | 2721387 | C1 | 19 May 2020 |
| | | | | CA | 3063820 | A1 | 09 December 2019 |
| | | | | KR | 20190135051 | A | 05 December 2019 |
| | | | | BR | 112019024097 | A2 | 02 June 2020 |
| CN | 106428000 | A | 22 February 2017 | None | | | |
| US | 2019205629 | A1 | 04 July 2019 | CN | 108875525 | A | 23 November 2018 |

Form PCT/ISA/210 (patent family annex) (January 2015)